# EUROPÄISCHE PATENTSCHRIFT

(11) **EP 1 324 517 B1**
(45) Veröffentlichungstag und Bekanntmachung des Hinweises auf die Patenterteilung: **09.09.2009**
(21) Anmeldenummer: 02028438.6
(22) Anmeldetag: 18.12.2002
(51) Int. Cl.: H04B 10/18

(54) **Anordnung und Verfahren zur Messung und zur Kompensation der Polarisationsmodendispersion eines optischen Signals**
Arrangement and Method for measuring and compensating the Polarisation Mode Dispersion of optical signals
Dispositif et méthode pour mesurer et compenser la dispersion modale de polarisation de signaux optiques

(30) Priorität: 28.12.2001 DE 10164497
(43) Veröffentlichungstag der Anmeldung: 02.07.2003
(73) Patentinhaber: Nokia Siemens Networks GmbH & Co. KG, 81541 München (DE)
(72) Erfinder: Kotten, Klaus, 81477 München (DE); Krummrich, Peter, Dr., 81379 München (DE)

(56) Entgegenhaltungen:
- DE-A1- 3 911 155
- US-A- 5 822 100
- US-B1- 6 271 952

## Beschreibung

Die Erfindung betrifft eine Anordnung und ein Verfahren nach den Oberbegriffen der Ansprüche 1, 4, 5, 8 und 11.

In optischen Wellenleitern können durch Doppelbrechung oder nicht rotationssymmetrische Brechzahlprofile unterschiedliche Gruppenlaufzeiten für die beiden orthogonalen Polarisationen eines Grundmodus auftreten. Die daraus resultierende Polarisationsmodendispersion PMD kann speziell bei Übertragungssystemen mit hohen Datenraten (typischerweise ab 10 Gbit/s) zu spürbaren Signalverzerrungen führen. Geringe Laufzeitunterschiede der in beiden Polarisationen übertragenen Signale verursachen Impulsverbreiterungen, Laufzeitunterschiede in der Größenordnung der Bitdauer oder darüber wirken sich als Intersymbol-Interferenzen aus. Um in Fasern mit hoher Polarisationsmodendispersion PMD noch qualitativ gute Signale mit hoher Kanaldatenrate übertragen zu können, müssen die Laufzeitunterschiede am Ende der Übertragungsstrecke wieder ausgeglichen werden. In "Impact of Polarisation Mode Dispersion on 10 Gbit/s Terrestrial Systems Over Non-Dispersion-Shifted Fiber", B. Clesca et al., Electronic Letters, 31st August 1995, Vol. 31, No. 18, Seiten 1594-1595 ist der Einfluß der Polarisationsmodendispersion PMD auf die Signalqualität durch eine Messung der Bitfehlerrate BER bei Laufzeitunterschieden zwischen Signalen mit einer Übertragungsrate von 10 Gbit/s dargestellt.

Temperaturänderungen der Umgebung des optischen Wellenleiters oder mechanische Schwingungen oder Unhomogenitäten beeinflussen die Doppelbrechung bzw. die Symmetrie des Brechzahlprofils sowie die Polarisationstransformationen im Wellenleiter. Als Folge können sich die Laufzeitunterschiede ändern und/oder die Polarisationen, in denen die beiden Signale an einem Empfänger ankommen. Ein Kompensationsverfahren zum Ausgleich der Laufzeitunterschiede muss diese Änderung daher ständig messen und ein Stellglied in einer Regelschleife an den aktuellen Polarisationszustand anpassen.

Es sind bereits verschiedene Verfahren oder Anordnungen zur Messung bzw. zur Kompensation der Polarisationsmodendispersion PMD bekannt.

Aus DE 198 18 699 A1 ist eine Anordnung zur Verringerung von Polarisationsmodendispersion-bedingten Signalverzerrungen durch Verwendung eines Filterverfahrens bekannt. Das Licht wird zur opto-elektronischen Wandlung auf eine Photodiode geführt. Das elektrische Signal wird aufgeteilt und verschiedenen elektrischen Filtern zugeführt. Dies können z. B. Bandpassfilter mit Mittenfrequenzen bei 1/2, 1/4 und 1/8 der Taktfrequenz sein (bei 10 Gbit/s also 5 GHz, 2,5 GHz und 1,25 GHz). Die Ausgangsspannungen oder Ausgangsleistungen der Bandpassfilter werden detektiert. Anhand der Größe der so detektierten Spektralanteile kann die Güte des Datensignals beurteilt werden. Wenn bei einem 10 Gbit/s NRZ (non return to zero) Signal zwischen den beiden Polarisationshauptzuständen PSP oder sogenannten "Principal States of Polarisation" eine Laufzeitdifferenz von 100 ps auftritt, was eine Verschiebung um ca. ein Bit entspricht, dann ist das Ausgangssignal des 5 GHz-Filters minimal. Bei einer Laufzeitdifferenz von 0 ps ist das Ausgangssignal maximal. Im Zuge einer Regelung in einem PMD-Kompensator wird also durch entsprechende Einstellungen am PMD-Kompensator versucht, dieses Signal zu maximieren. Da bei Laufzeitdifferenzen, die größer als eine Bitdauer sind, das Ausgangssignal dieses Filters wieder ansteigt, ist in diesem Bereich keine eindeutige Regelung mehr möglich. Daher werden zusätzlich die oben erwähnten Filter mit niedrigeren Mittenfrequenzen benötigt. Diese erreichen erst bei entsprechend größeren Laufzeitdifferenzen ihr Minimum. In einem PMD-Kompensator wird die Polarisationsmodendispersion PMD folglich zunächst mit Hilfe der niederfrequenten Filter grob kompensiert und dann, wenn das Ausgangssignal des höchstfrequenten Filters eindeutig wird, würde man dessen größere Empfindlichkeit nutzen, um die Polarisationsmodendispersion PMD möglichst weitgehend zu kompensieren und in der Folge bei Veränderungen möglichst frühzeitig nachzuregeln. Nachteilig ist, dass erst erkennbare Verzerrungen des optischen Signals auftreten müssen, bevor das Auftreten von Polarisationsmodendispersion PMD detektiert wird. Außerdem werden in erster Linie Verzerrungen detektiert, und diese können auch durch andere Effekte als PMD entstanden sein.

Ein bekanntes Verfahren zur Messung der Polarisation-Modendispersion PMD beruht auf einer Ankunftszeitdetektion. Bei diesem Verfahren wird bei einem optischen NRZ Signal dieses am Anfang der Übertragungsstrecke durch einen Polarisationsverwürfler geführt. Hierdurch wird erreicht, dass die Polarisation am Anfang der Strecke innerhalb eines kurzen Zeitintervalls alle denkbaren Zustände durchläuft. Das Signal durchläuft die Übertragungsfaser und einen anschließenden PMD-Kompensator. Sofern die Kombination aus der Übertragungsfaser und dem PMD-Kompensator eine Polarisationsmodendispersion erster Ordnung PMD1 aufweist, wird die Ankunftszeit des Signals variieren. Diese Variation ist proportional zur maximal auftretenden Gruppenlaufzeitdifferenz und damit zur Polarisationsmodendispersion erster Ordnung PMD1. Da die Taktrückgewinnung des Empfängers diesen Änderungen der Ankunftszeit folgt, kann z. B. das Signal am Eingang des spannungsgeregelten Oszillators (VCO) einem Integrator zugeführt werden und dessen Ausgangssignal genutzt werden, um die Polarisationsmodendispersion erster Ordnung PMD1 zu bestimmen. Die Frequenzen, mit denen der Polarisationsverwürfler angesteuert wird, dürfen nicht zu groß sein, damit die Taktrückgewinnung des Empfängers den Änderungen der Ankunftszeit noch folgen kann. Es werden für die Messung der Polarisationsmodendispersion PMD gezielt die Schwankungen der Ankunftszeit ausgewertet, deren Frequenz im Bereich der verwendeten Frequenzen für den Polarisationsverwürfler liegen.
Im Gegensatz zur vorliegenden Erfindung benötigt dieses Verfahren einen Polarisationsverwürfler am Eingang der Übertragungsstrecke. Außerdem funktioniert das Verfahren nicht mehr, wenn die zu messenden Laufzeitunterschiede in die Nähe der Bitdauer kommen oder diese gar überschreiten, da die Taktrückgewinnung dann nicht mehr funktioniert.

Aus EP 0 798 883 A2 ist ein optischer Empfänger mit einer Entzerrerschaltung für durch Polarisationsmodendispersion PMD verursachte Störungen bekannt. Der optische Empfänger des eingehenden Signals weist eine Aufteileinrichtung zur Trennung der TE- und TM-Moden des eingehenden Signals mit einem Polarisationssteller auf, der das ihr zugeführte Signal in zwei den TE- und TM-Moden entsprechende elektrische Signalanteile aufteilt. Beide Signalanteile weisen einen z. B. durch Polarisationsmodendispersion PMD verursachten Lautzeitunterschied auf, der einer Verschlechterung der Signalqualität entspricht. Die Entzerrerschaltung liefert mittels Mehrstufenentscheider und eine Regeleinrichtung eine Qualitätsmessung der beiden Signalanteile z. B. durch Bestimmung ihrer Bitfehlerrate oder mit Hilfe eines Minimierungsverfahrens der in den elektrischen Signalanteilen enthaltenen hochfrequenten Komponenten. Nach Auswahl des besten Signalsanteils gibt die Entezerrerschaltung ein Datensignal mit minimaler Bitfehlerrate ab. Verzögerungseinrichtungen werden den Zeitunterschied zwischen den beiden Signalanteilen kontinuierlich oder Stufenweise durch Steuersignale der Regeleinrichtung ausgleichen. Hinweise über die Messung der Zeitverzögerung bzw. die Steuersignale zum Ausgleich des Zeitunterschiedes werden hier nicht gegeben. Im optischen Teil des optischen Empfängers werden lediglich die Polarisationsebenen des eingehenden optischen Signals mittels eines der Regeleinrichtung ausgehenden Regelsignals je nach der durchgeführten Qualitätsmessung beeinflußt. Eine Messung der Zeitverzögerung über eine Bitdauer kann ebenfalls nicht durchgeführt werden.

Aus "Polarization Mode Dispersion Compensation by Phase Diversity Detection", B. W. Hakki, IEEE Photonics Technology Letters, Vol. 9, No. 1, January 1997 ist PMD-Kompensator beschrieben, bei dem ein Polarisationsmodendispersion aufweisendes optisches Signal in die zwei "Principal States of Polarisation" PSP durch Maximierung des gemessenen Phasenunterschiedes zwischen zwei pseudo-zufälligen Datensignalen mit einer Datenrate von 10 Gbit/s aufgeteilt wird. Nach Bestimmung des Phasenunterschiedes mittels eines 5 GHz Gilbert-Mischer wird eine Verzögerungsleitung zur Minimierung des Phasenunterschiedes verstellt. Hier wird auch eine Messung bzw. eine Kompensation des durch Polarisationsmodendispersion verursachten Phasenunterschiedes zwischen den den "Principal States of Polarisation" PSP entsprechenden Datensignalen auf die Bitdauer begrenzt.

Zur lediglichen Kompensation der Polarisationsmodendispersion PMD sind verschiedene PMD-Kompensatoren bekannt.

Aus WO 00/41344 ist ein PMD-Kompensator bekannt, der zwei "Principal States of Polarisation" PSP automatisch herausfindet und diese nach einer digitaler Signalverarbeitung auf zwei orthogonale lineare Polarisationsrichtungen eines Strahlteilers richtet.

Aus WO 00/45531 ist ein anderer PMD-Kompensator bekannt, der ohne digitale Signalverarbeitung aber mittels einer Taktrückgewinnung und eines Phasenmodulators die Phase jedes Bit der zwei durch Polarisationsmodendispersion zeitversetzten Datensignale ausgleicht.

Aus WO 00/03505 ist ferner ein PMD-Kompensator bekannt, der ein doppelbrechendes Substrat und einen auf der Oberfläche realisierten Wellenleiter mit elektrisch leitfähigen Elektroden aufweist und bei dem viele unterschiedliche Polarisationstransformationen mittels Steuerspannungen an den Elektroden im Betrieb derart einstellbar sind, daß die Polarisationsmodendispersion PMD erster und höherer Ordnungen kompensiert werden kann. In Fig. 5 dieses Dokuments wird ein adaptiver PMD-Kompensator beschrieben, bei dem eine Regelung mittels einer oder je nach kleinen oder großen Werten der Polarisationsmodendipersion mehrerer Passbandfilterungen des vom PMD-Kompensator ausgehenden Signals eine von einem Regler gesteuerte Neueinstellung der Steuerspannungen des PMD-Kompensator bewirkt.

Eine weitere Art zur Messung der PMD ist aus US-A-627 1952 bekannt.

Die Aufgabe der Erfindung liegt nun darin, eine Anordnung und ein Verfahren zur Messung und zur Kompensation der Verzerrungen durch Polarisationsmodendispersion erster Ordnung und weiterhin höherer Ordnungen bei der Übertragung eines optischen Signals anzugeben, die eine Bestimmung großer Laufzeitunterschiede, z. B. oberhalb einer Bitdauer, ermöglichen.

In einem ersten Schritt wird eine Anordnung zur Messung der Polarisationsmodendispersion erster Ordnung eines optischen Signals beschrieben, bei der einem Polarisationssteller das optische Signal zugeführt wird, der zwei orthogonal polarisierte Signale abgibt, die zwischen einander einen Laufzeitunterschiedes aufweisen und jeweils mittels eines Polarisationsstrahlteilers in zwei optische Zweige mit jeweils einem optischen Empfänger zur Wandlung in elektrische Ausgangssignale eingespeist sind. Erfindungsgemäß ist den zwei optischen Empfängern ein Regler nachgeschaltet, der eine genaue Auswerteeinheit des Laufzeitunterschiedes mittels der Kreuzkorrelation zwischen den elektrischen Ausgangssignalen aufweist. Ferner ist ein einstellbares Verzögerungsglied vor einem der optischen Empfänger in einem der Zweige angeordnet, wobei dessen Verzögerung durch ein Regelsignal vom Regler zur Suche des Maximums der Kreuzkorrelation verstellbar ist. Vorteilhafterweise erfolgt die Suche über einen großen Messbereich, der oberhalb einer Bitdauer liegen kann. Zwei Varianten der erfindungsgemäßen Anordnung zur Messung der Polarisationsmodendispersion erster Ordnung werden hier beschrieben.

Weitere Ausgestaltungen erfindungsgemäßer Anordnungen ermöglichen eine Messung und eine zusätzliche Kompensation der Polarisationsmodendispersion erster Ordnung durch die Ermittlung des gemessenen Lautzeitunterschiedes. Diese werden durch die Gegenstände der Patentansprüche 3, 4 und 5 beschrieben.

Bei dieser Erfindung werden in erster Linie eine Messung sowie eine Kompensation der Polarisationsmodendispersion erster Ordnung beschrieben. Weitere erfindungsgemäße Anordnungen werden ferner durch die Gegenstände der Patentansprüche 6, 7 und 8 beschrieben, die weitere höhere Ordnungen der Polarisationsmodendispersion ebenfalls ermitteln und kompensieren. Dadurch werden, insbesondere bei großen Laufzeitunterschieden, starke Verzerrungen durch hohe Ordnungen der Polarisationsmodendispersion in einer vorteilhaften Weise unterdrückt.

Ein erfindungsgemäßes Verfahren zur Ermittlung oder Kompensation des Laufzeitunterschiedes zwischen zwei orthogonal polarisierten Signalen bei Polarisationsmodendispersion erster Ordnung wird durch den Gegenstand des Patentanspruches 11 beschrieben.

Vorteilhafte Weiterbildungen der Erfindung werden in den Unteransprüchen angegeben.

Die Erfindung wird anhand von Ausführungsbeispielen mit Zeichnung näher erläutert. Dabei zeigen:
**Fig. 1****:** eine erste erfindungsgemäße Anordnung zur Messung des Lautzeitunterschiedes bei Polarisationsmodendispersion erster Ordnung,
**Fig. 2****:** eine Darstellung der Kreuzkorrelation als Funktion des Lautzeitunterschiedes DT zwischen zwei versetzten Signalen inner- und oberhalb einer Bitdauer BD,
**Fig. 3****:** eine zweite erfindungsgemäße Anordnung zur Messung des Lautzeitunterschiedes bei Polarisationsmodendispersion erster Ordnung,
**Fig. 4****:** eine erste erfindungsgemäße Anordnung zur Messung und Kompensation des Lautzeitunterschiedes DT bei Polarisationsmodendispersion erster Ordnung,
**Fig. 5****:** eine zweite erfindungsgemäße Anordnung zur Messung und Kompensation des Lautzeitunterschiedes DT bei Polarisationsmodendispersion erster Ordnung,
**Fig. 6****:** eine erste erweiterte erfindungsgemäße Anordnung zur Messung und Kompensation des Lautzeitunterschiedes DT bei Polarisationsmodendispersion erster und höherer Ordnungen,
**Fig. 7****:** eine zweite erweiterte erfindungsgemäße Anordnung zur Messung und Kompensation des Lautzeitunterschiedes DT bei Polarisationsmodendispersion erster und höherer Ordnungen.

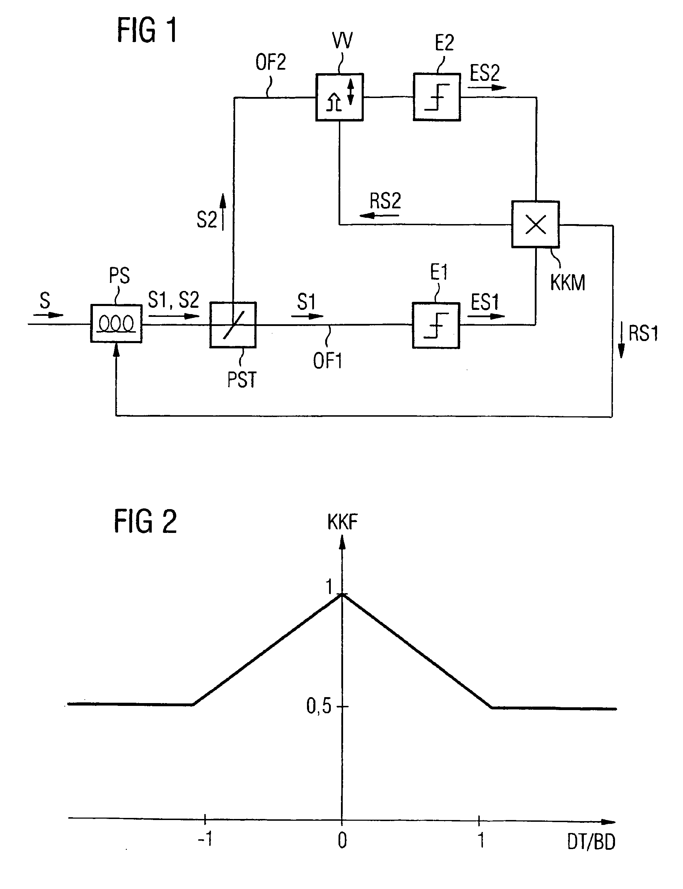

**Fig. 1** zeigt eine erste erfindungsgemäße Anordnung zur Messung des Lautzeitunterschiedes DT bei einer Polarisationsmodendispersion erster Ordnung PMD1, an deren Eingang ein Polarisationsmodendispersion erster Ordnung PMD1 aufweisendes optisches Signal S eingespeist ist. Dem Eingang der Anordnung ist ein Polarisationssteller PS zur einstellbaren Trennung und Abbildung des optischen Signals S in zwei orthogonal polarisierte Signale S1, S2 auf die Hauptachsen eines nachgeschalteten Polarisationsstrahlteilers PST nachgeschaltet. Der Begriff "orthogonal polarisiert" bedeutet hier, daß mittels zweier orthogonal polarisierter Signale alle polarisierte Zustände eines Signals beschrieben werden können. Die Polarisationsrichtungen, z. B. linear polarisiert, der Signale S1, S2 sind am Ausgang des Polarisationstellers PS derart eingestellt, daß die Signale S1, S2 genau die Hauptachsen des Polarisationsstrahlteilers PST treffen und je in einen weiteren optischen Zweig OF1, OF2 geleitet werden. Den zwei optischen Zweigen OF1, OF2 sind zwei opto-elektronische Wandler E1, E2, z. B. als optische Empfänger wie Fotodioden, angeschlossen, deren zwei elektrische Ausgangssignale ES1, ES2 einem Regler KKM zugeführt werden. Zwei Regelsignale RS1, RS2 des Reglers KKM werden dem Polarisationssteller PS bzw. einem einstellbaren Verzögerungsglied VV zugeführt. Das einstellbare Verzögerungsglied VV ist zwischen dem Polarisationsstrahlteiler PST und einem der opto-elektronischen Wandler E1 oder E2 angeordnet. Die opto-elektronischen Wandler E1, E2 weisen eine Taktrückgewinnung und eine Entscheiderstufe auf.
Der Regler KKM weist eine Auswerteeinheit des Laufzeitunterschiedes DT zwischen den Signalen S1 und S2 durch Ermittlung der Kreuzkorrelation zwischen den elektrischen Ausgangssignalen ES1, ES2 auf, wobei im Betrieb das elektrische Signal ES2 eine durch das Verzögerungsglied VV eingestellte Verzögerung zu dem Signal S2 aufweist, die permanent als verbleibenden Verzögerung weiterhin feinermittelt bzw. in weiteren Anordnungen der Erfindung feinkompensiert wird.
Zuerst wird die Verzögerung des Verzögerungsglieds VV mittels des Regelsignals RS2 variiert, bis das Maximum der Kreuzkorrelation erreicht ist und dann wird der Polarisationssteller PS zur betragsmäßigen Maximierung der eingestellten Verzögerung des Verzögerungsglieds W mittels des Regelsignals RS1 vom Regler KKM geregelt. Dies bedeutet, daß die Verzögerung des Verzögerungsglieds VV derart verstellt wird, daß sie dem ursprünglichen Laufzeitunterschied DT zwischen den optischen Signalen S1, S2 entspricht. Ist das Maximum der eingestellten Verzögerung des Verzögerungsgliedes W durch die Verstellung des Polarisationsstellers PS erreicht, bildet der Polarisationssteller PS die "Principal States of Polarisation" PSP mit maximalem Laufzeitunterschied DT genau auf die Trennkennlinien oder sogenannten Hauptachse des Polarisationsstrahlteilers PST ab. Die dabei eingestellte Verzögerung W entspricht dadurch genau dem durch Polarisationsmodendispersion erster Ordnung PMD1 verursachten gemessenen Laufzeitunterschied DT.

In **Fig. 2** ist die normierte Kreuzkorrelation, die als Auswerteeinheit des Laufzeitunterschiedes im Regler KKM aus Figur 1 vorgesehen ist, als Funktion des Lautzeitunterschiedes DT oder einer zeitlichen Verzögerungsverstellung zwischen zwei versetzten Signalen unter- und oberhalb einer Bitdauer BD dargestellt.
Weisen die Ausgangssignale ES1, ES2 bei der Anordnung gemäß Fig. 1 keinen Laufzeitunterschied auf, dann wird das Maximum der Kreuzkorrelation hier mit dem Wert 1 erreicht.
Für Laufzeitunterschiede DT bis zu einer Bitdauer BD nimmt die Kreuzkorrelationsfunktion proportional zum Laufzeitunterschied DT auf einem Wert (hier 0,5) ab (unter der Annahme, daß bei den Ausgangssignalen ES1 und ES2 Nullen und Einsen gleich häufig auftreten).
Bei hohen Laufzeitunterschieden, z. B. oberhalb der Bitdauer der gemessenen Signale, sind die elektrischen Ausgangssignale ES1 und ES2 nur minimal korreliert. Daher liefert die Kreuzkorrelationsfunktion im Regler KKM kein Maximum, sondern einen konstanten Wert. Praktisch erfolgt eine sogenannte "betragsmäßige" Maximierung der eingestellten Verzögerung des Verzögerungsgliedes VV durch eine optimale Abbildung bzw. Regelung der orthogonal polarisierten Signale S1, S2 des Polarisationsstellers PS auf den Hauptachsen des nachgeschalteten Polarisationsstrahlteilers PST. Das einstellbare Verzögerungsglied W in einem der optischen Zweige OF1, OF2 wird weiterhin so lange verstellt, bis sich die endgültige Suche des Maximumwerts 1 der Kreuzkorrelation im Bereich einer Bitdauer BD befindet. Da sich im Laufe der Zeit die "Principal States of Polarisation" PSP und die Lautzeitunterschiede bei Polarisationsmodendispersion erster Ordnung PMD1 in einer Übertragungsfaser, z. B. bei mechanischen Störungen oder Temperaturänderungen, ändern bzw. schwanken können, werden der Polarisationssteller PS und das Verzögerungsglied VV zur Erzielung des Maximums der Kreuzkorrelation permanent und möglichst schnell genug geregelt.
Das Verzögerungsglied VV wird so kalibriert, dass in der Mittelstellung das optische Signal S1 vom Polarisationsstrahlteiler PST bis zum Empfänger E1 genauso lange läuft wie das optische Signal S2 vom Polarisationsstrahlteiler PST bis zum Empfänger E2. Um den Laufzeitunterschied DT der Signale S1, S2 in orthogonalen Polarisationzuständen zu bestimmen, regelt der Regler KKM die Einstellung des Verzögerungsglieds W, bis eine Kreuzkorrelation mit dem Wert 1 auftritt. Die dafür erforderliche Verstimmung des Verzögerungsglieds VV von der Mittelstellung gibt ihm dann den Wert für den Laufzeitunterschied DT an. Folglich ist der Messbereich für Laufzeitunterschiede nur durch den Abstimmbereich des einstellbaren Verzögerungsglieds VV begrenzt.

Da sich im Laufe der Zeit die "Principal States of Polarisation" PSP und der Laufzeitunterschied DT, oder sogenannte "Differential Group Delay" DGD, der Übertragungsfaser ändern können, muß permanent nachgeregelt werden. Hierzu muß die eingestellte Verzögerung des Verzögerungsgliedes W ständig etwas variiert werden, so daß permanent über das Maximum der Kreuzkorrelationsfunktion hin und her gefahren wird.
Wenn sich der Laufzeitunterschied DT der Übertragungsstrecke jetzt z. B. vergrößert, dann kann mit Hilfe einer entsprechenden Auswerte-Elektronik festgestellt werden, daß das Maximum der Kreuzkorrelationsfunktion nicht mehr in der Mitte des Variationsbereichs der Verzögerung des einstellbaren Verzögerungsglieds VV liegt, und daß die Verzögerung vergrößert werden muß, damit die Variation wieder symmetrisch zum Maximum der Kreuzkorrelationsfunktion erfolgt. Wenn man diese Variation beispielsweise mit einem sinusförmigen Signal durchführt, dann läßt sich bei korrekter Einstellung der Verzögerung diese Frequenz in der Kreuzkorrelationsfunktion nicht mehr detektieren (es erfolgt eine Frequenzverdopplung). Wenn die Verzögerung nicht richtig eingestellt ist und der aktuelle Arbeitspunkt liegt auf einer der Flanken der Kreuzkorrelationsfunktion, dann läßt sich das Signal wieder detektieren und die Phasenlage gibt an, auf welcher Seite des Maximums man sich befindet. Derartige Regelungsverfahren, z. B sogenannte Lock-in-Verfahren, sind auch in anderen Bereichen der Technik üblich und können auch hier für die Stabilisierung auf dem Maximum verwendet werden, sobald die Verzögerung des einstellbaren Verzögerungsglieds VV den ursprünglichen Laufzeitunterschied DT auf einen Wert kleiner als eine Bitdauer BD reduziert hat.

Wenn sich die "Principal States of Polarisation" PSP der Übertragungsstrecke ändern, dann wird der im vorhergehenden Abschnitt beschriebene Algorithmus zu einer betragsmäßig verkleinerten Einstellung der Verzögerung führen, auch wenn sich der Laufzeitunterschied DT der Übertragungsstrecke gar nicht verändert hat. Ein weiterer Algorithmus muß also permanent kleine Veränderungen an der Einstellung desPolarisationsstellers PS vornehmen, und zwar mit dem Ziel, die Einstellung der Verzögerung des Verzögerungsglieds W zu maximieren.

Wenn die Leistungsverteilung des Lichts auf die beiden "Principal States of Polarisation" PSP stark unsymmetrisch wird und im Extremfall die Leistung vollständig in einem der "Principal States of Polarisation" PSP der Übertragungsstrekke übertragen wird, dann erhält bei korrekter Einstellung des Polarisationsstellers PS einer der beiden Empfänger E1 und E2 kein Eingangssignal mehr und die Kreuzkorrelation kann nicht mehr gebildet werden. Damit besteht die Gefahr, daß die Einstellung des Verzögerungsglieds W in falscher Weise verändert wird. Daher muß in diesem Fall, wenn die Eingangsleistung am Empfänger E1 oder E2 eine bestimmte Leistungsschwelle unterschreitet, die Einstellung des Verzögerungsglieds VV und des Polarisationsstellers PS festgehalten werden, und zwar so lange, bis wieder ausreichend Leistung an beiden Empfängern vorliegt. Die Phase, während der die Einstellungen festgehalten werden, ist insofern unkritisch, als in diesem Fall die Lichtleistung nur in einem der "Principal States of Polarisation" PSP enthalten ist und somit keine Verzerrungen durch Polarisationsmodendispersion erster Ordnung vorliegen.

Wenn die Einstellung des Verzögerungsglieds W und des Polarisationsstellers PS nach dem Einschalten noch weit vom korrekten Arbeitspunkt entfernt sind, muß dieser Punkt zunächst gesucht werden. Dazu muß das einstellbare Verzögerungsglied VV über den ganzen Einstellbereich durchgestimmt werden, und dies ggf. mehrmals mit verschiedenen Einstellungen des Polarisationsstellers PS. Erst wenn der Polarisationssteller PS zumindest grob die korrekte Aufteilung der "Principal States of Polarisation" PSP auf die beiden optische Zweige vornimmt, kann beim Durchstimmen des Verzögerungsglieds W auch der Laufzeitunterschied DT gefunden werden, bei dem das Maximum der Kreuzkorrelation auftritt. Wenn dieser Punkt gefunden ist, kann nach dem zuvor beschriebenen Verfahren den Änderungen der "Principal States of Polarisation" PSP und des Laufzeitunterschiedes DT der Übertragungsfaser kontinuierlich gefolgt werden.

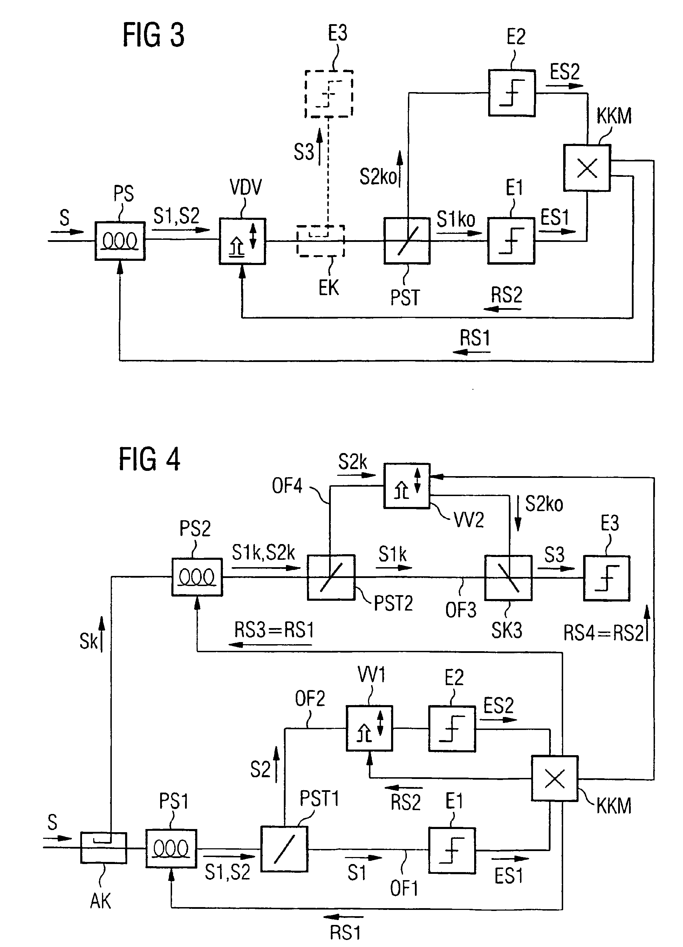

**Fig. 3** zeigt eine zweite erfindungsgemäße Anordnung zur Messung des Lautzeitunterschiedes bei Polarisationsmodendispersion erster Ordnung PMD1, die mit der Anordnung nach Fig. 1 weitgehend identisch ist. Der Unterschied besteht lediglich darin, daß das einstellbare Verzögerungsglied W aus Fig. 1 durch ein doppelbrechendes Element VDV mit einstellbarem Laufzeitunterschied zwischen seinen Hauptachsen ersetzt ist, das dem Polarisationssteller PS und dem Polarisationsstrahlteiler PST zwischengeschaltet ist und dem das Regelsignal RS2 vom Regler KKM zugeführt ist.
Anschließend folgt ein Polarisationsstrahlteiler PST, dessen Ausgangssignale S1, S2 den Empfängern E1 und E2 zugeführt werden. Der Polarisationsstrahlteiler PST muss dabei so an dem Ausgang des doppelbrechenden Elements angekoppelt werden, dass er die Signalkomponenten trennt, die aus den Hauptachsen des einstellbaren doppelbrechenden Elementes VDV austreten. Im Vergleich zu dem Aufbau in Fig. 1 wird die Aufteilung des Signals für die Empfänger E1 und E2 also erst nach der Einstellung des Laufzeitunterschiedes durchgeführt.

Eine Auskopplungseinrichtung EK ist dem doppelbrechenden Element VDV zum Abzweigen eines Signals S3 nachschaltbar. Das Signal S3 kann nach Regelung mittels der Komponenten (KKM, VDV, PS) durch neue zeitversetzte d.h. Polarisationsmodendispersion erster Ordnung PMD1 kompensierte Signale S1ko, S2ko ausgekoppelt und einem optischen Empfänger E3 zugeführt werden. Die Auskopplungseinrichtung EK ist derart ausgewählt, daß sie die Polarisationseigenschaften der Übertragung zwischen dem doppelbrechenden Element VDV und dem nachgeschalteten Polarisationsstrahlteiler PST möglichst nicht beeinflusst. Zur Erhaltung des Signals S3 könnte auch nach Regelung ein Teil des zeitverschobenen Signals S2ko am Ausgang des doppelbrechenden Elements VDV ausgekoppelt und mit einem ausgekoppelten Teil des Signals Slko wieder zusammengefasst werden.

**Fig. 4** zeigt eine erste erfindungsgemäße Anordnung zur Messung und Kompensation des Lautzeitunterschiedes DT bei Polarisationsmodendispersion erster Ordnung PMD1. In der Praxis wird diese Anordnung wegen der Redundanz ihrer Komponenten nicht so realisiert, wird aber zur Verdeutlichung des Schaltprinzips modular in Fig. 4 demnach erläutert. Die Anordnung zur Messung des Lautzeitunterschiedes DT entspricht zunächst weitgehend der Anordnung nach Fig. 1 bzw. Fig. 3, wobei das Verzögerungsglied W bzw. das doppelbrechende Element VDV als erstes Verzögerungsglied VV1 bzw. VDV1, der Polarisationssteller PS als erster Polarisationssteller PS1 und der Polarisationsstrahlteiler PST als erster Polarisationsstrahlteiler PST1 bezeichnet sind. Im Unterschied zu Fig. 1 und 3 wird zur Kompensation des Lautzeitunterschiedes DT wird wenigstens ein Teil des optischen Signals S vor dem Einspeisen in den Polarisationssteller PS1 mittels einer Auskopplungseinrichtung AK in einen zweiten Polarisationssteller PS2 eingespeist, dem ein Regelsignal RS3 (= RS1) vom Regler KKM zur Einstellung der entsprechenden "Principal States of Polarisation" PSP zugeführt ist. Dem zweiten Polarisationssteller PS2 ist ein zweiter Polarisationsstrahlteiler PST2 nachgeschaltet, der die den Lautzeitunterschied DT aufweisenden "Principal States of Polarisation" S1k, S2k genau in zwei optische Zweige OF3, OF4 trennt. Ein zweites einstellbares Verzögerungsglied VV2 ist in einem der zwei optischen Zweige gemäß der Messanordnung angeordnet und ihre Verzögerung wird mittels eines Regelsignals RS4 (= RS2) aus dem Regler KKM zur Kompensation des Lautzeitunterschiedes DT eingestellt. Anschließend werden das optische Signal S1k und das kompensierte Signal S2ko in den zwei optischen Zweige OF3, OF4 nach dem Verzögerungsglied W2 mittels eines dritten Polarisationsstrahlteilers PST3 wieder in ein optisches Signal S3 zusammengefasst und einem dritten Empfänger E3 zugeführt.
Die hier beschriebene Anordnung wurde schrittweise zur Klarstellung der Messung und der Kompensation von Polarisationsmodendispersion erster Ordnung PMD1 dargestellt. Selbstverständlich ist es in der Praxis möglich, einige Komponenten einzusparen.

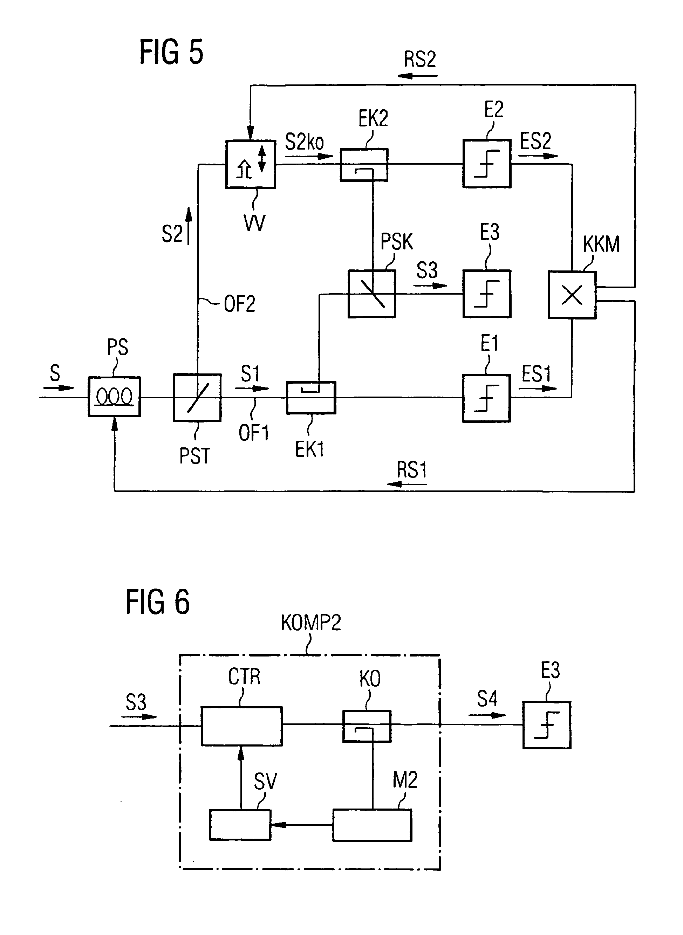

In **Fig. 5** ist eine zweite erfindungsgemäße Anordnung zur Messung und Kompensation des Lautzeitunterschiedes DT bei Polarisationsmodendispersion erster Ordnung PMD1 dargestellt, bei der die Anordnung aus Fig. 4 für praktische Realisierungszwecke optimiert wird. Für die Messung des Laufzeitunterschiedes DT durch Polarisationsmodendispersion erster Ordnung PMD1 wird aus Fig. 1 verwiesen. In den zwei optischen Zweigen OF1, OF2 wird jeweils eine Auskoppeleinrichtung EK1, EK2 dem Empfänger E1, E2 vorgeschaltet. Aus der Auskopplungseinrichtung EK2 ist ein Teil des durch das vorgeschaltete vom Regler KKM einstellbare Verzögerungsglied VV PMD1-kompensierte Signal S2ko abgezweigt und wird mittels eines Polarisationsstrahlkopplers PSK mit einem aus der Auskopplungseinrichtung EK1 abgezweigten Teil des Signals S1 zu einem Signal S3 zusammengefasst. Anschließend kann dem Ausgang des Polarisationsstrahlkopplers PSK ein dritter Empfänger E3 angeordnet werden.

Diese Anordnung kann ebenfalls mit einer Messanordnung nach Fig. 3 nachgeschaltet werden.

Eine weitere Variante besteht für alle Anordnungen der vorliegenden Anmeldung darin, in der Messanordnung anstelle oder zusätzlich zum optischen einstellbaren Verzögerungsglieds W bzw. VDV eine elektrische Leitung mit variabler Verzögerung zu verwenden. Diese wird nach der Wandlung des optischen Signals in ein elektrisches mittels der opto-elektronischen Wandler E1, E2 eingefügt. Entweder kann eine Verzögerungsleitung in einem Empfänger eingesetzt werden oder in beiden Empfängern E1, E2 je eine Verzögerungsleitung mit differentieller Ansteuerung. Für die PMD-Kompensation wird weiterhin eine optische Leitung mit variabler Verzögerung benötigt, damit der dritte Empfänger E3 ein unverzerrtes Signal S3 erhält, in dem beide "Principal States of Polarisation" PSP d. h. hier S1, S2ko enthalten sind.

Die in **Fig. 6** dargestellte erweiterte erfindungsgemäße Anordnung ermöglicht eine Messung und eine Kompensation des Lautzeitunterschiedes DT bei Polarisationsmodendispersion (erster und) höherer Ordnungen. Tatsächlich haben höhere Ordnungen der Polarisationsmodendispersion bei großen Laufzeitunterschieden, z. B. über eine Bitdauer, zwischen den "Principal States of Polarisation" PSP einen starken Einfluß auf die Signalqualität.
Ausgehend von Fig. 4 oder 5 wird das mit Polarisationsmodendispersion erster Ordnung PMD1 kompensierte Signal S3 in einen Kompensator KOMP2 der Polarisationsmodendispersion höherer Ordnungen eingespeist, dessen Ausgang dem optischen Empfänger E3 angeschlossen ist.
Im Vergleich zu Fig. 4 oder 5 bzw. Fig. 1, 3 werden die Empfänger E1 und E2 wegen entsprechender Verzerrungen höherer Ordnungen nicht mehr korrekt entscheiden. Die Lösung besteht darin, Empfänger ohne Taktrückgewinnung und ohne Entscheider zu verwenden, d.h. die Kreuzkorrelation im Regler KKM wird aus analogen Signalen von Fotodioden als optischen Empfängern E1 und E2 errechnet. Die Ausgangssignale ES1, ES2 werden elektrisch möglichst auf einen konstanten Pegel mittels einer Verstärkereinheit verstärkt, damit die Kreuzkorrelation im Regler KKM unabhängig von den Eingangsleistungen an den Fotodioden E1, E2 wird, so wie es auch für Empfänger mit Taktrückgewinnung und Entscheider mit Hilfe eines "Automatic-Gain-Control"(-AGC)-Verstärkers üblich ist.
Als Kompensator KOMP2 der Polarisationsmodendispersion höherer Ordnungen können unterschiedliche bekannte Kompensatoren verwendet werden. Der Kompensator KOMP2 weist am Eingang einen mehrstufigen PMD-Controller CTR auf. Dieser kann beispielsweise aus mehreren doppelbrechenden Elementen, z. B. polarisationserhaltenden Fasern, und Polarisationsstellern, die jedem dieser Elemente vorgeschaltet sind, bestehen. Alternativ kann es sich dabei auch um eine Komponente nach dem Stand der Technik gemäß der bereits zitierten WO 00/03505 handeln, bei der die Doppelbrechung und die Polarisationseinstellmöglichkeiten nahezu kontinuierlich über die Länge des Bauteils als PMD-Controllers CTR verteilt sind. Ein dem PMD-Controller CTR nachgeschalteter Koppler KO führt einen Teil des Lichts zu einer Meßeinrichtung M2, welche die Polarisationsmodendispersion höherer Ordnung bzw. deren Auswirkung auf die Signalqualität detektiert/ermittelt. Die Ausgangssignale des PMD-Detektors M2 werden einer Signalverarbeitung SV zugeführt, in welcher ein Regelalgorithmus zur Minimierung der detektierten Polarisationsmodendispersion höherer Ordnung implementiert ist. Weitere Ausgangssignale der Signalverarbeitung SV steuern den mehrstufigen PMD-Controller CTR, z. B. durch Neueinstellung der darin enthaltenen Polarisationssteller. Das vom Koppler KO nicht ausgekoppelte Ausgangssignal des PMD-Kompensators KOMP2 höherer Ordnung wird schließlich dem Empfänger E3 zugeführt. Dieses Konzept setzt aber voraus, daß die Eigenschaften des mehrstufigen PMD-Controllers CTR genau bekannt sind und sich auch nicht durch Alterungseffekte ändern bzw. diese Änderungen zumindest bekannt sind, z. B. durch automatische Rekalibrierung im Betrieb. Nur so kann sichergestellt werden, daß die Ansteuerung des PMD-Controllers CTR nur in der Weise erfolgt, daß keine Polarisationsmodendispersion erster Ordnung PMD1 von ihm erzeugt wird, sondern nur Polarisationsmodendispersion höherer Ordnung. Anderenfalls würde die vorherige Kompensation von Polarisationsmodendispersion erster Ordnung PMD1 wieder zunichte gemacht.

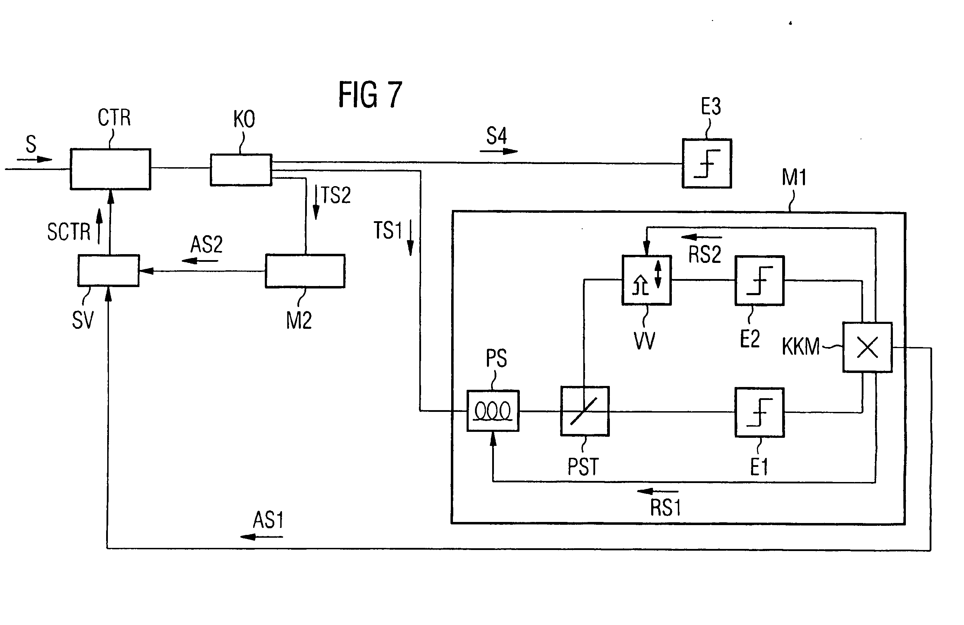

In **Fig. 7** ist eine zweite erweiterte erfindungsgemäße Anordnung zur Messung und Kompensation des Lautzeitunterschiedes DT bei Polarisationsmodendispersion erster und höherer Ordnungen PMD1, PMD2 dargestellt, bei der die Anordnung zur Messung und Kompensation der Polarisationsmodendispersion erster Ordnung PMD1 je nach den Figuren 1 bis 5 verwendet ist. Das Polarisationsmodendispersion aufweisende Signal S gelangt an einen mehrstufigen PMD-Controller CTR, welcher aufgrund des mehrstufigen Aufbaus neben Polarisationsmodendispersion erster Ordnung PMD1 auch Polarisationsmodendispersion höherer Ordnungen PMD2 kompensieren kann (siehe Stand der Technik). Mit Hilfe eines Kopplers KO wird ein Teil TS1 des Ausgangssignals des PMD-Controllers CTR zur Messung der Polarisationsmodendispersion erster Ordnung PMD1 der in Fig. 1 dargestellten Meßanordnung M1 zugeführt. Ein weiterer Teil TS2 des Ausgangssignals des PMD-Controllers CTR wird einem PMD-Detektor M2 als Detektion- und Messeinrichtung einer Polarisationsmodendispersion höherer Ordnung PMD2 zugeführt. Die Ausgangssignale AS1, AS2 beider Meßeinheiten M1, M2 werden einer Signalverarbeitung SV zugeführt, welche einen Regelalgorithmus zur Minimierung von Polarisationsmodendispersion erster und höherer Ordnung PMD1, PMD2 enthält und den PMD-Controller CTR entsprechend ansteuert. Entgegen der Anordnung aus Fig. 6 müssen hier die Eigenschaften des mehrstufigen PMD-Controllers CTR nicht exakt bekannt und langzeitstabil sein. Vielmehr kann mit Hilfe eines Gradientenverfahrens eine permanente Minimierung der detektierten Polarisationsmodendispersion erfolgen. Dazu werden z. B. an den Eingangsgrößen der Steuerelektroden des mehrstufigen PMD-Controllers CTR jeweils die Veränderungen vorgenommen, für die mit den Meßeinheiten M1 und M2 eine Verbesserung festgestellt wurde.

## Patentansprüche

1. Anordnung zur Messung der Polarisationsmodendispersion erster Ordnung (PMD1) eines optischen Signals (S), bei der einem Polarisationssteller (PS) das optische Signal (S) zugeführt wird, der zwei orthogonal polarisierte Signale (S1, S2) abgibt, die zwischen einander einen Laufzeitunterschiedes (DT) aufweisen und jeweils mittels eines Polarisationsstrahlteilers (PST) in zwei optische Zweige (OF1, OF2) mit jeweils einem optischen Empfänger (E1, E2) zur Wandlung in elektrische Ausgangssignale (ES1, ES2) eingespeist sind,
**dadurch gekennzeichnet,**
**dass** ein einstellbares Verzögerungsglied (VV) einem der optischen Empfänger (E1, E2) vorgeschaltet ist,
**dass** den zwei optischen Empfängern (E1, E2) ein Regler (KKM) nachgeschaltet ist, der eine Auswerteeinheit des Laufzeitunterschiedes (DT) mittels einer Kreuzkorrelation zwischen den elektrischen Ausgangssignalen (ES1, ES2) aufweist,
**dass** dem Polarisationssteller (PS) ein erstes Regelsignal (RS1) vom Regler (KKM) zugeführt ist und
**dass** dem Verzögerungsglied (VV) ein zweites vom Regler (KKM) ausgehendes Regelsignal (RS2) zugeführt ist.

2. Anordnung nach Anspruch 1,
bei der das Verzögerungsglied (VV) durch ein doppelbrechendes Element (VDV) mit einstellbarem Laufzeitunterschied ersetzt ist, das dem Polarisationssteller (PST) und dem Polarisationsstrahlteiler (PST) zwischengeschaltet ist und dem das Regelsignal (RS2) zugeführt ist.

3. Anordnung nach Anspruch 2,
**dadurch gekennzeichnet,**
**dass** dem doppelbrechenden Element (VDV) eine Entkopplungseinrichtung (EK) zur Gewinnung eines kompensierten optischen Signals (S3) nachgeschaltet ist, wobei das kompensierte optische Signal (S3) Anteile von Polarisationsmodendispersion erster Ordnung (PMD1) kompensierten orthogonal polarisierten Signalen (Slko, S2ko) aufweist.

4. Anordnung nach Anspruch 1,
**dadurch gekennzeichnet,**
**dass** eine dem ersten Polarisationssteller (PS1) vorgeschaltete Entkopplungseinrichtung (AK) vorgesehen ist, die wenigstens einen Teil (Sk) des optischen Signals (S) einem zweiten Polarisationssteller (PS2) zuführt, dem das erste Regelsignal (RS1) des Reglers (KKM) zugeführt ist, und an dessen Ausgang zwei orthogonal polarisierte Signale (S1k, S2k) über einen zweiten Polarisationsstrahlteiler (PST2) jeweils in zwei weitere optische Zweige (OF3, OF4) eingespeist sind, deren einer Zweig ein zweites vom zweiten Regelsignal (RS2) des Reglers (KKM) gesteuertes einstellbares Verzögerungsglied (VV2) zur Kompensation des Laufzeitunterschiedes (DT) zwischen den orthogonal polarisierten Signalen (S1k, S2k) bzw. (S1, S2) aufweist und dass die Ausgänge der beiden optischen Zweige (OF3, OF4) einem Strahlkoppler (SK3) zugeführt sind, der aus den zusammengefassten Signalen (S1k, S2ko) ein kompensiertes optisches Signal (S3) bildet, das einem dritten optischen Empfänger (E3) zugeführt ist.

5. Anordnung nach Anspruch 1,
**dadurch gekennzeichnet,**
**daß** im Signalweg zwischen dem Polarisationssteller (PST) und dem ersten optischen Empfänger eine erste Entkopplungseinrichtung (EK1) angeordnet ist, deren abgezweigtes Signal einem Strahlkoppler (PSK) zugeführt ist,
**daß** im Signalweg zwischen dem Verzögerungsglied (VV) und dem zweiten Empfänger (E2) eine zweite Entkopplungseinrichtung (EK2) angeordnet ist, deren abgezweigtes Signal dem Strahlkoppler (PSK) zugeführt sind, dessen Ausgangssignal als kompensiertes optisches Signal (S3) einem dritten optischen Empfänger (E3) zugeführt ist.

6. Anordnung nach einem der Ansprüche 3 bis 5,
**dadurch gekennzeichnet,**
**dass** das kompensierte optische Signal (S3) einem Modul (KOMP2) zur Detektion und zur Kompensation der Polarisationsmodendispersion zumindest höherer Ordnungen (PMD2) als die Polarisationsmodendispersion erster Ordnung (PMD1) zugeführt ist.

7. Anordnung nach Anspruch 6,
**dadurch gekennzeichnet,**
**dass** das Modul (KOMP2) einen PMD-Kontroller (CTR) aufweist, dessen Eingang das kompensierte optische Signal (S3) zugeführt ist und dessen Ausgangsignal mittels einer Entkopplungseinrichtung (KO) in zwei Signale aufgeteilt ist, die je einem optischen Empfänger (E3) und einer Meßeinrichtung (M2) zugeführt sind,
**daß** die Meßeinrichtung (M2) eine Detektionseinheit für Polarisationsmodendispersion hoher Ordnung (PMD2) aufweist und ein Ausgangssignal (SCTR) an ein Signalverarbeitungsmodul (SV) zur Steuerung des PMD-Kontrollers (CTR) abgibt.

8. Anordnung nach Anspruch 1,
**dadurch gekennzeichnet,**
**dass** sie zur Messung und Kompensation von Polarisationsmodendispersion erster und höherer Ordnungen einen PMD-Kontroller (CTR) und einen diesem nachgeschalteten Koppler (KO) zum Abzweigen wenigstens zweier Anteilsignale (TS1, TS2) aufweist, dass mindestens eine weitere Meßanordnung (M2) zur Messung der Polarisationsdispersion höherer Ordnungen (PMD2) vorgesehen ist,
**dass** ein erstes Anteilsignal (TS1) einer Meßanordnung nach Anspruch 1 zur Ermittlung des der Polarisationsmodendispersion erster Ordnung (PMD1) entsprechenden Laufzeitunterschiedes (DT) zugeführt wird, die ihr Verzögerungsglied (VV) einstellt, dass ein zweites Anteilsignal (TS2) der weiteren Meßanordnung (M2) zugeführt wird,
**dass** das Ausgangssignal (AS1) der Meßanordnung nach Anspruch 1 (M1) vom Regler (KKM) abgegeben ist,
**dass** einem Signalverarbeitungsmodul (SV) zur Steuerung des PMD-Kontrollers (CTR) Ausgangssignale (AS1, AS2) beider Meßanordnungen (M1, M2) zugeführt werden und
**dass** ein weiteres Anteilsignal (S4) einem dritten optischen Empfänger (E3) als kompensiertes Signal (S4) zugeführt wird.

9. Anordnung nach einem der vorhergehenden Ansprüche,
**dadurch gekennzeichnet,**
**dass** dem Polarisationssteller (PS, PS1, PS2) das Regelsignal (RS1) vom Modul (KMM) zur Einstellung von orthogonal polarisierten Signalen (S1, S2) derart zugeführt ist, dass die orthogonal polarisierten Signale (S1, S2) möglichst genau den Hauptachsen des nächsten nachgeschalteten Polarisationsstrahlteilers (PST, PST1, PST2) zugeordnet sind und die dann einen maximalem Laufzeitunterschied (DT) aufweisenden orthogonal polarisierten Signale (S1, S2) vom Polarisationsstrahlteiler (PST, PST1, PST2) getrennt werden.

10. Anordnung nach einem der vorhergehenden Ansprüche,
**dadurch gekennzeichnet,**
**dass** die optischen Empfänger (E1, E2) als analoge optisch-elektronische Wandler mit Detektion einer Schwellenunterschreitung ihrer Leistung ausgeführt sind und daß den optischen Empfängern (E1, E2) eine Verstärkungseinheit nachgeschaltet ist.

11. Verfahren zur Ermittlung oder zur Kompensation des Laufzeitunterschiedes (DT) zwischen zwei einem Polarisationssteller (PS) mit nachgeschaltetem Polarisationsstrahlteiler (PST) ausgehenden orthogonal polarisierten optischen Signalen (S1, S2) bei Polarisationsmodendispersion erster Ordnung (PMD1), die je in elektrische Signale (ES1, ES2) konvertiert sind,
**dadurch gekennzeichnet,**
**dass** eine Kreuzkorrelation der optischen Signale (S1, S2) zur Feststellung des Laufzeitunterschiedes zwischen den optischen Signalen (S1, S2) bzw. zwischen den elektrischen Signale (ES1, ES2) durchgeführt wird,
**dass** hierzu ein einstellbares Verzögerungsglied (VV) verstellt wird, bis die Kreuzkorrelationsfunktion ihr Maximum (1) erreicht, und dass zur Maximierung der eingestellten Verzögerung des Verzögerungsglieds (VV) der Polarisationssteller (PS) verstellt wird.

12. Verfahren nach Anspruch 11,
**dadurch gekennzeichnet,**
**dass** bei weiteren Ermittlungen oder Kompensationen der Polarisationsmodendispersion (PMD) das einstellbare Verzögerungsglied (VV) für alle Neueinstellungen des Polarisationsstellers (PS) permanent so eingestellt wird, dass die Kreuzkorrelation maximal bleibt.

13. Verfahren nach Anspruch 12,
**dadurch gekennzeichnet,**
**dass** zur Feinermittlung oder Feinkompensation von verbleibenden Laufzeitunterschieden zumindest innerhalb einer Bitdauer ein Lock-in-Verfahren für die Einstellung des Verzögerungsglieds (VV) verwendet wird.

14. Verfahren nach Anspruch 13,
**dadurch gekennzeichnet,**
**dass** die Ermittlung oder die Kompensation des Laufzeitunterschiedes (DT) möglichst schnell erfolgt, so daß Änderungen oder Schwankungen der Signale (S1, S2), insbesondere bei mechanischen Störungen oder bei Temperaturänderungen über einer vorgeschalteten Übertragungsstrecke, die Ermittlung oder die Kompensation des Laufzeitunterschiedes (DT) nicht beeinträchtigen.

15. Verfahren nach Anspruch 14,
**dadurch gekennzeichnet, dass** anstelle oder zusätzlich zu einem optischen einstellbaren Verzögerungsglieds (VV) wenigstens einem der optischen Empfänger (E1, E2) eine elektrische Leitung mit einstellbarer Verzögerung nachgeschaltet wird oder wenigstens in einem der optischen Empfänger (E1, E2) integriert wird.

## Claims

1. Arrangement for measuring the first-order polarization mode dispersion (PMD1) of an optical signal (S), in which a polarization controller (PS) is supplied with the optical signal (S) and outputs two orthogonally polarized signals (S1, S2) which have a delay time difference (DT) between one another and are respectively fed by means of a polarization beam splitter (PST) into two optical paths (OF1, OF2) with a respective optical receiver (E1, E2) for conversion into electrical output signals (ES1, ES2),
**characterized**
**in that** an adjustable delay element (VV) is connected upstream of one of the optical receivers (E1, E2),
**in that** the two optical receivers (E1, E2) have a regulator (KKM) connected downstream of them which has an evaluation unit for the delay time difference (DT) using a cross-correlation between the electrical output signals (ES1, ES2),
**in that** the polarization controller (PS) is supplied with a first regulatory signal (R1) from the regulator (KKM), and
**in that** the delay element (VV) is supplied with a second regulatory signal (RS2) from the regulator (KKM).

2. Arrangement according to Claim 1,
in which the delay element (VV) is replaced by a birefractive element (VDV) with an adjustable delay time difference which is connected between the polarisation controller (PST) and the polarisation beam splitter (PST) and which is supplied with the regulatory signal (RS2).

3. Arrangement according to Claim 2,
**characterized**
**in that** the birefractive element (VDV) has a decoupling device (EK) connected downstream of it for obtaining a compensated optical signal (S3), wherein the compensated optical signal (S3) has components of orthogonally polarised signals (S1ko, S2ko) compensated for first-order polarisation mode dispersion (PDM1).

4. Arrangement according to Claim 1,
**characterized**
**in that** a decoupling device (AK) connected upstream of the first polarisation controller (PS1) is provided which supplies at least one portion (SK) of the optical signal (Sn) to a second polarisation controller (PS2) which is supplied with the first regulatory signal (RS1) from the regulator (KKM) and whose output feeds two orthogonally polarised signals (S1k, S2k) via a second polarisation beam splitter (PST2) into two respective further optical paths (OF3, OF4), one path of which has a second adjustable delay element (VV2), controlled by the second regulatory signal (RS2) from the regulator (KKM), for compensating for the delay time difference (DT) between the orthogonally polarised signals (S1k, S2k) and (S1, S2), and in that the outputs of the two optical paths (OF3, OF4) are supplied to a beam coupler (SK3) which takes the combined signals (S1k, S2ko) and forms a compensated optical signal (S3) which is supplied to a third optical receiver (E3).

5. Arrangement according to Claim 1,
**characterized**
**in that** the signal path between the polarisation controller (PST) and a first optical receiver contains a first decoupling device (EK1) whose branched-off signal is supplied to a beam coupler (PSK),
**in that** the signal path between the delay element (VV) and the second receiver (E2) contains a second decoupling device (EK2) whose branched-off signal is supplied to the beam coupler (PSK), whose output signal is supplied as a compensated optical signal (S3) to a third optical receiver (E3).

6. Arrangement according to one of Claims 3 to 5,
**characterized**
**in that** the compensated optical signal (S3) is supplied to a module (KOMP2) for detecting and compensating for the polarisation mode dispersion of at least higher orders (PMD2) than the first-order polarisation mode dispersion (PMD1).

7. Arrangement according to Claim 6,
**characterized**
**in that** the module (KOMP2) has a PMD controller (CTR) whose input is supplied with the compensated optical signal (S3) and whose output signal is split by means of a decoupling device (KO) into two signals which are respectively supplied to an optical receiver (E3) and a measuring device (M2),
**in that** the measuring device (M2) has a detection unit for high-order polarisation mode dispersion (PMD2) and outputs an output signal (SCTR) to a signal processing module (SV) for controlling the PMD controller (CTR).

8. Arrangement according to Claim 1,
**characterized**
**in that** for the purpose of measuring and compensating the polarisation mode dispersion of first and higher orders it has a PMD controller (CTR) and a coupler (KO), connected downstream thereof, for branching off at least two component signals (TS1, TS2),
**in that** at least one further measuring arrangement (M2) for measuring the polarisation dispersion of higher orders (PMD2) is provided,
**in that** a first component signal (TS1) is supplied to a measuring arrangement according to Claim 1 for ascertaining the delay time difference (DT) corresponding to the first-order polarisation mode dispersion (PMD1), which measuring arrangement adjusts its delay element (VV),
**in that** a second component signal (TS2) is supplied to the further measuring arrangement (M2),
**in that** the output signal (AS1) from the measuring arrangement according to Claim 1 (M1) is output by the regulator (KKM),
**in that** a signal processing module (SV) for controlling the PMD controller (CTR) is supplied with output signals (AS1, AS2) from both measuring arrangements (M1, M2), and
**in that** a further component signal (S4) is supplied to a third optical receiver (E3) as compensated signal (S4).

9. Arrangement according to one of the preceding claims,
**characterized in that** the polarisation controller (PS, PS1, PS2) is supplied with the regulatory signals (RS1) from a module (KMM) for adjusting orthogonally polarised signals (S1, S2) such that the orthogonally polarised signals (S1, S2) are associated as accurately as possible with the main axes of the next downstream polarisation beam splitters (PST, PST1, PST2) and the orthogonally polarised signals (S1, S2) which then have a maximum delay time difference (DT) are separated by the polarisation beam splitter (PST, PST1, PST2).

10. Arrangement according to one of the preceding claims,
**characterized**
**in that** the optical receivers (E1, E2) are in the form of analogue opto-electronic converters with detection of when their power is below a threshold, and in that the optical receivers (E1, E2) have an amplification unit connected downstream of them.

11. Method for ascertaining or compensating for the delay time difference (DT) between two orthogonally polarised optical signals (S1, S2) from a polarisation controller (PS) with a downstream polarisation beam splitter (PST) in the case of first-order polarisation mode dispersion (PMD1) which are respectively converted into electrical signals (ES1, ES2),
**characterized**
**in that** cross-correlation of the optical signals (S1, S2) is performed in order to establish the delay time difference between the optical signals (S1, S2) or between the electrical signals (ES1, ES2),
**in that** to this end an adjustable delay element (VV) is adjusted until the cross-correlation function reaches its maximum (1),
and **in that** the polarisation controller (PS) is adjusted in order to maximize the set delay for the delay element (VV).

12. Method according to Claim 11,
**characterized**
**in that** in the case of further ascertainments or compensations for the polarisation mode dispersion (PMD) the adjustable delay element (VV) is permanently adjusted for all the adjustments of the polarisation controller (PS) such that the cross-correlation remains at a maximum.

13. Method according to Claim 12,
**characterized**
**in that,** for the purpose of fine ascertainment of or fine compensation for remaining delay time differences at least within one bit period, a lock-in method is used for adjusting the delay element (VV).

14. Method according to Claim 13,
**characterized**
**in that** the delay time difference (DT) is ascertained or compensated for as quickly as possible, so that the changes or fluctuations in the signals (S1, S2), particularly in the event of mechanical faults or in the event of temperature changes over an upstream transmission link, do not adversely affect the ascertainment or compensation for the delay time difference (DT).

15. Method according to Claim 14,
**characterized**
**in that** instead of or in addition to an optical adjustable delay element (VV) an electrical line with adjustable delay is connected downstream of at least one of the optical receivers (E1, E2) or is integrated in at least one of the optical receivers (E1, E2).

## Revendications

1. Agencement pour mesurer la dispersion modale de polarisation de premier ordre (PMD1) d'un signal (S) optique, sur lequel le signal (S) optique est amené à un actionneur de polarisation (PS), lequel émet deux signaux (S1, S2) polarisés de façon orthogonale, qui présentent entre eux une différence de temps de propagation(DT) et sont injectés à chaque fois au moyen d'un diviseur de faisceau de polarisation (PST) dans deux branches (OF1, OF2) optiques avec à chaque fois un récepteur (E1, E2) optique pour la conversion en signaux de sortie (ES1, ES2) électriques,
**caractérisé en ce que**
un temporisateur (VV) réglable est monté en amont de l'un des récepteurs (E1, E2) optiques,
**en ce qu'**un régulateur (KKM) est monté en aval des deux récepteurs (E1, E2) optiques, lequel présente une unité d'analyse de la différence de temps de propagation(DT) au moyen d'une corrélation croisée entre les signaux de sortie (ES1, ES2) électriques,
**en ce qu'**un premier signal de réglage (RS1) provenant du régulateur (KKM) est amené à l'actionneur de polarisation (PS) et
**en ce qu'**un second signal de réglage (RS2) émanant du régulateur (KKM) est amené au temporisateur (VV).

2. Agencement selon la revendication 1,
dans lequel le temporisateur (VV) est remplacé par un élément (VDV) biréfringent avec une différence de temps de propagationréglable, qui est intercalé entre l'actionneur de polarisation (PST) et le diviseur de faisceau de polarisation (PST) et auquel le signal de réglage (RS2) est amené.

3. Agencement selon la revendication 2,
**caractérisé en ce que**
un dispositif de découplage (EK) est monté en aval de l'élément (VDV) biréfringent pour l'obtention d'un signal (S3) optique compensé, le signal (S3) optique compensé présentant des parties de signaux (S1ko, S2ko) polarisés de façon orthogonale et compensés par de la dispersion modale de polarisation de premier ordre (PMD1).

4. Agencement selon la revendication 1,
**caractérisé en ce que**
il est prévu un dispositif de découplage (AK) monté en amont du premier actionneur de polarisation (PS1) qui amène au moins une partie (Sk) du signal (S) optique à un second actionneur de polarisation (PS2), auquel le premier signal de réglage (RS1) du régulateur (KKM) est amené, et à la sortie duquel deux signaux (S1k, S2k) polarisés de façon orthogonale sont injectés au moyen d'un second diviseur de faisceau de polarisation (PST2) à chaque fois dans deux branches (OF3, OF4) optiques supplémentaires, dont une branche présente un second temporisateur (VV2) réglable et commandé par le second signal de réglage (RS2) du régulateur (KKM) pour la compensation de la différence de temps de propagation(DT) entre les signaux (S1k, S2k) ou (S1, S2) polarisés de façon orthogonale et **en ce que** les sorties des deux branches (OF3, OF4) optiques sont amenées à un coupleur de faisceau (SK3), qui forme à partir des signaux (S1k, S2ko) regroupés un signal (S3) optique compensé qui est amené à un troisième récepteur (E3) optique.

5. Agencement selon la revendication 1,
**caractérisé en ce que**
un premier dispositif de découplage (EK1) est disposé dans le trajet du signal entre l'actionneur de polarisation (PST) et le premier récepteur optique, dispositif dont le signal dévié est amené à un coupleur de faisceau (PSK),
**en ce qu'**un second dispositif de découplage (EK2) est disposé dans le trajet du signal entre le temporisateur (VV) et le second récepteur (E2), dispositif dont le signal dévié est amené au coupleur de faisceau (PSK), dont le signal de sortie est amené sous forme de signal (E3) optique compensé à un troisième récepteur (S3) optique.

6. Agencement selon l'une quelconque des revendications 3 à 5,
**caractérisé en ce que**
le signal (S3) optique compensé est amené à un module (KOMP2) pour la détection et pour la compensation de la dispersion modale de polarisation d'ordres au moins supérieurs (PMD2) à la dispersion modale de polarisation de premier ordre (PMD1).

7. Agencement selon la revendication 6,
**caractérisé en ce que**
le module (KOMP2) présente un contrôleur à PMD (CTR), à l'entrée duquel le signal (S3) optique compensé est amené et dont le signal de sortie est divisé au moyen d'un dispositif de découplage (KO) en deux signaux qui sont amenés chacun à un récepteur (E3) optique et un appareil de mesure (M2),
**en ce que** l'appareil de mesure (M2) présente une unité de détection pour une dispersion modale de polarisation d'ordre élevé (PMD2) et envoie un signal de sortie (SCTR) à un module de traitement de signal (SV) pour la commande du contrôleur à PMD (CTR).

8. Agencement selon la revendication 1,
**caractérisé en ce que**
il présente pour la mesure et la compensation de la dispersion modale de polarisation de premier ordre et d'ordres supérieurs un contrôleur à PMD (CTR) et un coupleur (KO) monté en aval du contrôleur pour la déviation d'au moins deux signaux partiels (TS1, TS2), **en ce qu'**au moins un autre dispositif de mesure (M2) est prévu pour la mesure de la dispersion de polarisation d'ordres supérieurs (PMD2),
**en ce qu'**un premier signal partiel (TS1) est amené à un dispositif de mesure selon la revendication 1 pour la détermination de la différence de temps de propagation(DT) correspondant à la dispersion modale de polarisation de premier ordre (PMD1), lequel dispositif règle son temporisateur (VV),
**en ce qu'**un second signal partiel (TS2) est amené au second dispositif de mesure (M2),
**en ce que** le signal de sortie (AS1) du dispositif de mesure selon la revendication 1 (M1) est émis par le régulateur (KKM),
**en ce que** des signaux de sortie (AS1, AS2) des deux dispositifs de mesure (M1, M2 ) sont amenés à un module de traitement de signal (SV) pour la commande du contrôleur à PMD (CTR), et
**en ce qu'**un signal partiel (S4) supplémentaire est amené à un troisième récepteur (E3) optique comme signal (S4) compensé.

9. Agencement selon l'une quelconque des revendications précédentes,
**caractérisé en ce que**
le signal de réglage (RS1) provenant du module (KKM) est amené à l'actionneur de polarisation (PS, PS1, PS2) pour le réglage de signaux (S1, S2) polarisés de façon orthogonale de telle sorte que les signaux (S1, S2) polarisés de façon orthogonale sont attribués de la façon la plus précise possible aux axes principaux du prochain diviseur de faisceau de polarisation (PST, PST1, PST2) monté en aval et les signaux (S1, S2) polarisés orthogonalement et présentant une différence de temps de propagation(DT) maximale sont séparés par le diviseur de faisceau de polarisation (PST, PST1, PST2).

10. Agencement selon l'une quelconque des revendications précédentes,
**caractérisé en ce que**
les récepteurs (E1, E2) optiques sont réalisés sous forme de convertisseurs optiques-électroniques analogiques avec détection d'un sous-dépassement seuil de leur puissance et **en ce qu'**une unité d'amplification est montée en aval des récepteurs (E1, E2) optiques.

11. Procédé pour déterminer ou pour compenser la différence de temps de propagation(DT) entre deux signaux (S1, S2) optiques, polarisés de façon orthogonale et partant d'un actionneur de polarisation (PS) avec un diviseur de faisceau de polarisation (PST) monté en aval avec une dispersion modale de polarisation de premier ordre (PMD1), qui sont convertis à chaque fois en signaux (ES1, ES2) électriques,
**caractérisé en ce que**
une corrélation croisée des signaux (S1, S2) optiques est effectuée pour déterminer la différence de temps de propagation entre les signaux (S1, S2) optiques ou entre les signaux (ES1, ES2) électriques,
**en ce qu'**un temporisateur (VV) réglable est ajusté à cet effet jusqu'à ce que la fonction de corrélation croisée atteigne son maximum (1), et **en ce que** l'actionneur de polarisation (PS) est réglé pour la maximisation de la temporisation réglée du temporisateur (VV).

12. Procédé selon la revendication 11,
**caractérisé en ce que,**
pour d'autres déterminations ou compensations de la dispersion modale de polarisation (PMD), le temporisateur (VV) réglable est réglé de façon permanente pour tous les nouveaux réglages de l'actionneur de polarisation (PS) de telle sorte que la corrélation croisée reste maximale.

13. Procédé selon la revendication 12,
**caractérisé en ce que**
un procédé de lock-in est utilisé pour le réglage du temporisateur (VV) pour la détermination affinée ou la compensation affinée de différences de temps de propagation restantes au moins dans le délai d'une durée binaire.

14. Procédé selon la revendication 13,
**caractérisé en ce que**
la détermination ou la compensation de la différence de temps de propagation(DT) s'effectue le plus rapidement possible de sorte que des modifications ou des variations des signaux (S1, S2), en particulier dans le cas d'incidents mécaniques ou dans le cas de variations de température sur un tronçon de transmission placé en amont, n'altèrent pas la détermination ou la compensation de la différence de temps de propagation(DT).

15. Procédé selon la revendication 14,
**caractérisé en ce que,**
au lieu ou en supplément d'un temporisateur (VV) réglable optique, une ligne électrique avec une temporisation réglable est montée en aval d'au moins l'un des récepteurs (E1, E2) optiques ou est intégré au moins dans l'un des récepteurs (E1, E2) optiques.
